Europäisches Patentamt

**European Patent Office**

Office européen des brevets

(11) Veröffentlichungsnummer: **0 086 849**

**A1**

(12) **EUROPÄISCHE PATENTANMELDUNG**

(21) Anmeldenummer: **82100153.4**

(22) Anmeldetag: **12.01.82**

(51) Int. Cl.³: **G 09 B 29/14**
    **G 04 B 19/22**

(43) Veröffentlichungstag der Anmeldung:
**31.08.83** Patentblatt **83/35**

(84) Benannte Vertragsstaaten:
**AT BE CH DE FR GB IT LI LU NL SE**

(71) Anmelder: **Siegfried Pohl Werkzeug- und Formenbau**
**Tyrolsberger Strasse 29**
**D-8431 Neumarkt- Woffenbach(DE)**

(72) Erfinder: **Pohl, Siegfried**
**Tyrolsbergerstrasse 29**
**D-8430 Neumarkt-Woffenbach(DE)**

(74) Vertreter: **Göbel, Matthias, Dipl.-Ing.**
**Pruppacher Hauptstrasse 5-7**
**D-8501 Pyrbaum-Pruppach(DE)**

(54) **Vorrichtung zum Anzeigen von Weltzeiten.**

(57) Bei einer Vorrichtung zum Anzeigen von Weltzeiten ist unter Aufbringung eines geringen baulichen Aufwands die Stabilität und die Handhabung zu verbessern durch einen Ortsaufdrucke (2) aufweisenden kreisrunden Scheibenkörper (1) mit einem koaxial auf der Rückseite fest angeordneten Bund (3) und einem über die Randkante des Scheibenkörpers (1) vorstehenden, mit Zahlenaufdrucken (15) versehenen kreisrunden Scheibenkörper (4), der auf den Bund (3) konzentrisch drehbar lagert und auf diesen mittels einer am Bund (3) festgelegten Scheibe (7) gehalten ist.

Fig.3

DIPL.-ING. **M. GÖBEL**
PATENTANWALT

**0086849**

8501 PYRBAUM-PRUPPACH
PRUPPACHER HAUPTSTRASSE 5-7
TELEFON 09180/675
TELEGRAMM GOEPATENT PYRBAUM
TELEX 624407 GOEPA

BANKKONTEN:
VOLKSBANK NÜRNBERG 45233 BLZ 76090000
COMMERZBANK NÜRNBERG 8300907 BLZ 76040061

– 1 –

Siegfried Pohl Werkzeug- und Formenbau
D 8430 Neumarkt - Woffenbach


Vorrichtung zum Anzeigen von Weltzeiten

Die Erfindung betrifft eine Vorrichtung zum Anzeigen
von Weltzeiten

Bekanntlich erfordert die Ermittlung der jeweils herrschenden Uhrzeit für Städte fremder Länder und Kontinente umständliche Umrechnungen der eigenen Ortszeit. Es ist weiter bekannt, solche Uhrzeiten durch sogenannte Weltzeituhren anzuzeigen. Die Weltzeituhren weisen als Nachteil eine komplizierte Ausgestaltung auf und bedürfen einen großen wirtschaftlichen Aufwand. Außerdem erfordern die Weltzeituhren einen großen Platzbedarf. Darüber hinaus sind Weltzeituhren aufgrund ihres relativ großen Gewichts auch nur schwierig zu transportieren und somit als mobile Anzeigeeinrichtungen ungeeignet.

Es ist Aufgabe der Erfindung eine stabile Vorrichtung mit kleinem baulichen Aufwand zum Anzeigen von Weltzeiten zu schaffen.

Der Erfindung gemäß ist dies erreicht durch einen Ortsaufdrucke aufweisenden kreisrunden Scheibenkörper mit einem koaxial auf der Rückseite fest angeordneten Bund und einem über die Randkante des Scheibenkörpers vorstehenden, mit Zahlenaufdrucken versehenen kreisrunden Scheibenkörper, der auf den Bund konzentrisch drehbar  lagert und auf diesen mittels einer am Bund festgelegten Scheibe gehalten ist. Die so relativ zueinander verdrehbaren Scheibenkörper erlauben durch beliebige Zuordnung von  Orts- und Zahlenaufdrucken, die als Städtenamen bzw. Uhrzeiten von 0 bis 24 ausgebildet sind, die zum jeweiligen Zeitpunkt in den gewünschten Städten maßgebliche Uhrzeit unmittelbar abzulesen. In Abwandlung der Erfindung besteht die Möglichkeit zur Umkehrung der Orts- und Zahlenaufdrucke auf den Scheibenkörpern, d.h. der den Bund  aufweisende Scheibenkörper kann mit Zahlenaufdrucken und der überragende Randstreifen des anderen Scheibenkörpers mit Ortsaufdrucken versehen sein. Die Vorrichtung ist neben ihrer einfachen und sicheren Handhabung mechanisch stabil und zeichnet sich durch ein geringes Gewicht und eine große Mobilität aus. Außerdem ist die Vorrichtung in beliebigen Größen mit einer beliebigen Anzahl und unterteilten Aufdrucken ausführbar. Zweckmäßig ist der Scheibenkörper und der Bund als einstückiges Formteil, insbesondere Blech- oder Spritzgußformteil ausgebildet.

Gemäß bevorzugter Ausgetaltung der Vorrichtung greift der die Ortsaufdrucke aufweisende Scheibenkörper in eine Einziehung oder Ausnehmung des anderen Scheibenkörpers ein, deren Tiefe im wesentlichen der Dicke des eingreifenden Scheibenkörpers entspricht. Hierdurch ist der die Ortsaufdrucke aufweisende Scheibenkörper versenkt im anderen Scheibenkörper untergebracht, der zur weiteren Stabilisierung und verletzungsfreien Handhabung der Vorrichtung eine angebogene bzw. angeformte Randwulst aufweist.

Schließlich sieht die Erfindung noch vorteilhafte Maßnahmen zum Halten von Bund und Scheibe aneinander dadurch vor, daß beide durch Klemmittel fest oder lösbar fest verbunden sind. Als Klemmittel können Schrauben, Kerbstifte od.dgl. dienen. Weiter können Bund und Scheibe auch mittels Rastengliedern aneinander festgelegt sein. Zweckmäßig weist der Bund hierzu als Rastenkörper wirkende Zapfen auf, die in korrespondierende Öffnungen der Scheibe eingreifen. Die Verwendung von Rastengliedern führt zu einer besonders einfachen Montage der Vorrichtung.

Die Handhabung der Vorrichtung kann beliebig durch Halten durch den Benutzer erfolgen. Es besteht aber auch die Möglichkeit die Vorrichtung an Wänden angehängt zu verwenden. Ein Anhängen der Vorrichtung ist einfach dadurch erreichbar, wenn die Scheibe mit einer eine Lochung aufweisenden Lasche versehen ist. Zweckmäßig ist die Lasche so an der Scheibe angeordnet, daß sich der Ort des Benutzers im oberen Scheitel des die Ortsaufdrucke aufweisenden Scheibenkörpers befindet. Es besteht auch die Möglichkeit zu Anpassnungen an verschiedene Orte , die Lasche verstellbar fest an den Scheibe anzubringen, wodurch beliebige Grundeinstellungen der Scheibenkörper zueinander möglich sind. Zu diesem Zweck kann der Bund die rückseitige Fläche des anderen Scheibenkörpers überragen und das freie Ende des Bundes durch eine Klemmschelle lösbar fest umfaßt sein, die ihrerseits eine Lasche mit Lochung aufweist.

Die Erfindung ist anhand eines Ausführungsbeispiels in der Zeichnung erläutert. Hierin zeigen:

Figur 1   eine Vorrichtung in Vorderansicht,

Figur 2   eine Vorrichtung in Rückansicht,

Figur 3   eine Vorrichtung im Schnitt, vergrößert,

Figur 4   eine Vorrichtung gemäß anderer Ausführung im Schnitt, vergrößert und

Figur 5   eine Klemmschelle mit einem Bund in Rückansicht.

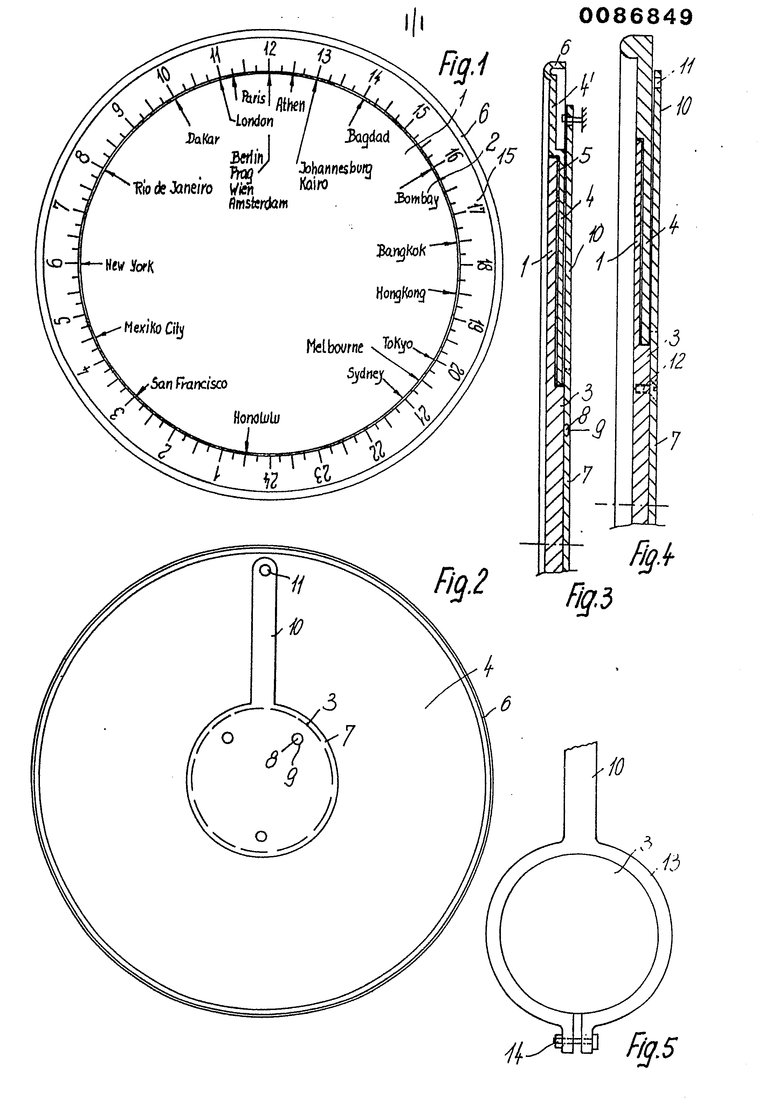

Bei der in den Figuren 1 bis 3 gezeigten Vorrichtung ist mit 1 ein mit Ortsaufdrucken 2 versehener Scheibenkörper bezeichnet, der auf seiner Rückseite koaxial einen zylindrischen Bund 3 aufweist. Der Scheibenkörper 1 ist beim Ausführungsbeispiel als Spritzgußformteil ausgeführt und mit dem Bund 3 einstückig ausgeformt. Auf dem Bund 3 ist ein im Durchmesser größerer Scheibenkörper 4 mit Zahlenaufdrucken 15 konzentrisch drehbar aufgebracht, der beim Ausführungsbeispiel der Fig. 3  als Blechformteil ausgebildet ist und demgemäß mit einem Randstreifen 4' den Scheibenkörper 1 überragt. Der Scheibenkörper 4  ist mit einer Einziehung 5 versehen, die den Scheibenkörper 1 aufnimmt. Im Randbereich weist der Randstreifen 4' eine Randwulst 6 auf, die der Stabilisierung des Scheibenkörpers 4 und zur verletzungsfreien Handhabung desselben beiträgt. Der Scheibenkörper 4 ist auf dem Bund 3 durch eine Scheibe  7 gehalten (Fig. 2) die gemäß der Figuren 2  und 3  durch Rastenglieder, z.B.

Zapfen 8 und Lochungen 9 mit dem Bund 3 verbunden ist. Die Zapfen 8 und Lochungen 9 sind so angeordnet, daß eine Codierung zur vorbestimmten Zuordnung der Scheibe 7 zum Bund erreicht ist. Hierzu sind die Zapfen 8 und die Lochungen 9 um ungleiche Winkelgrade zueinander versetzt ausgebildet.

Beim Ausführungsbeispiel der Figur 4 sind die Scheibenkörper 1 und 4 durch Spritzformteile gebildet und der Scheibenkörper 4 auf einem Bund 3 des Scheibenkörpers 1 mittels einer Scheibe 7 drehbar gehalten. Die Scheibe 7 ist mit einer Lasche 10 versehen, die eine als Öse wirkende Lochung 11 aufweist. Mittels der Lasche 10 ist ein Anhängen der Vorrichtung an Wänden, wie in Fig. 3 gezeigt, möglich. Die Scheibe 7 ist bei der Vorrichtung der Fig. 4 durch Senkschrauben 12 am Bund 3 gehalten.

Bei der Vorrichtung der Fig. 5 ist in weiterer Abweichung auf dem Bund 3 eine Klemmschelle 13 aufgebracht, die eine Lasche 10 trägt. Die Klemmschelle 13 ist mittels einer Klemmschraube 14 am Bund lösbar festgelegt, wodurch beliebig verschiedene Grundeinstellungen des die Ortsaufdrucke aufweisenden Scheibenkörpers 1 zu dem die Zeitaufdrucke tragenden Scheibenkörpers 4 möglich sind.

Die Funktion der Vorrichtung erfolgt dergestalt, daß der Benutzer seinen Ortsaufdruck 2 der seinem Ort entsprechenden Uhrzeit gegenüberstellt und die den weiteren Ortsaufdrucken zugehörige Uhrzeiten durch Ablesen ermittelt.

Patentansprüche:

1. Vorrichtung zum Anzeigen von Weltzeiten, gekennzeichnet, durch einen Ortsaufdrucke (2) aufweisenden kreisrunden Scheibenkörper (1) mit einem koaxial auf der Rückseite fest angeordneten Bund (3) und einem über die Randkante des Scheibenkörpers (1) vorstehenden, mit Zahlenaufdrucken (15) versehenen kreisrunden Scheibenkörper (4), der auf den Bund (3) konzentrisch drehbar lagert und auf diesen mittels einer am Bund (3) festgelegten Scheibe (7) gehalten ist.

2. Vorrichtung nach Patentanspruch 1, dadurch gekennzeichnet, daß der Scheibenkörper (1) und der Bund (3) durch ein einstückiges Formteil gebildet ist.

3. Vorrichtung nach Patentanspruch 1 und 2, dadurch gekennzeichnet, daß der Scheibenkörper (1) in einer Einziehung oder Ausnehmung (5) des Scheibenkörpers (4) eingreift, deren Tiefe im wesentlichen der Dicke des Scheibenkörpers (1) entspricht.

4. Vorrichtung nach Patentanspruch 1 und 3, dadurch gekennzeichnet, daß die Scheibenkörper (1, 4) durch Blechformteile gebildet sind.

5. Vorrichtung nach Patentanspruch 1 und 3, dadurch gekennzeichnet, daß die Scheibenkörper (1, 4) als Spritzgußformteile ausgebildet sind.

6. Vorrichtung nach Patentanspruch 1, 4 und 5, dadurch gekennzeichnet, daß der Scheibenkörper (4) eine angebogene oder angeformte Randwulst (6) aufweist.

7. Vorrichtung nach Patentanspruch 1, dadurch gekennzeichnet, daß die Scheibe (7) durch Klemmittel (12) fest oder lösbar fest mit dem Bund (3) verbunden ist.

8. Vorrichtung nach Patentanspruch 1, dadurch gekennzeichnet, daß die Scheibe (7) durch Rastenglieder (8, 9) mit dem Bund (3) lösbar fest verbunden ist.

9. Vorrichtung nach Patentanspruch 1, 7 und 8, dadurch gekennzeichnet, daß mit der Scheibe (7) eine Lasche (10) verbunden ist, die eine als Öse dienende Lochung (11) aufweist.

10. Vorrichtung nach Patentanspruch 1, dadurch gekennzeichnet, daß der Bund (3) rückseitig den Scheibenkörper (4) überragt und das freie Ende des Bundes (3) durch eine Klemmschelle (13) lösbar fest umfaßt ist, die eine mit einer Lochung (11) versehene Lasche (10) aufweist.

0086849

*Fig.1*

10 11 12 13 14 15 16 17 18 19 20 21 22 23 24
1 2 3 4 5 6 7 8 9

Paris
London
Athen
Dakar
Berlin
Prag
Wien
Amsterdam
Johannesburg
Kairo
Bagdad
Rio de Janeiro
Bombay
New York
Bangkok
HongKong
Mexiko City
Melbourne Tokyo
San Francisco
Sydney
Honolulu

1
6
2
15

*Fig.2*

11
10
4
6
3
7
8
9

*Fig.3*

*Fig.4*

6
4'
5
4
1
10
1
7
8
3
9
7

11
10
4
1
3
12
7

*Fig.5*

10
3
13
14

Europäisches
Patentamt

EUROPÄISCHER RECHERCHENBERICHT

**0086849**
Nummer der Anmeldung

EP    82 10 0153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-B-1 277 600   (SCHMÜCKER) *Spalte 2, Zeilen 25-38; Spalte 4, Zeilen 1-4; Figuren* | 1,3 | G 09 B   29/14 G 04 B   19/22 |
| Y | DE-C-  365 839   (RAUCHE) *Seite 1, Zeilen 39-42; Figur 2* | 1-3,7 | |
| A | MC-A-34 662 326 (ALLULLI) *Seite 3, Zeile 47 bis Seite 4, Zeile 85* | 1,4,5 | |
| A | US-A-3 472 021   (KARAKAWA) *Figuren 1,2* | 1,7 | |
| A | FR-A-  808 295   (DUSSEL) *Figur 1* | 6 | |
| A | US-A-2 056 089   (BOGGS) *Seite 3, Spalte 1, Zeilen 39-58; Figur 6* | 1,9 | |

RECHERCHIERTE SACHGEBIETE (Int. Cl. ³)

G 04 B
G 09 B
G 09 D
G 06 C

Der vorliegende Recherchenbericht wurde für alle Patentansprüche erstellt.

| Recherchenort | Abschlußdatum der Recherche | Prüfer |
|---|---|---|
| DEN HAAG | 09-09-1982 | PINEAU A.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82